Europäisches Patentamt

European Patent Office

Office européen des brevets

(11) Numéro de publication: **0 058 452**
**B1**

(12) **FASCICULE DE BREVET EUROPEEN**

(45) Date de publication du fascicule du brevet: **29.05.85**

(21) Numéro de dépôt: **82200141.8**

(22) Date de dépôt: **08.02.82**

(51) Int. Cl.⁴: **G 01 N 25/72**, G 01 N 21/88

(54) **Procédé et dispositif pour la détection des défauts de surface des profilés et des demi-produits.**

(30) Priorité: **12.02.81 BE 6047399**

(43) Date de publication de la demande:
**25.08.82 Bulletin 82/34**

(45) Mention de la délivrance du brevet:
**29.05.85 Bulletin 85/22**

(84) Etats contractants désignés:
**DE FR GB LU**

(56) Documents cités:
**BE-A- 833 244**
**DE-A-2 643 361**
**FR-A-1 289 255**
**FR-A-2 446 476**
**GB-A-1 191 540**
**US-A-4 118 732**

(73) Titulaire: **CENTRE DE RECHERCHES
METALLURGIQUES CENTRUM VOOR
RESEARCH IN DE METALLURGIE Association
sans but lucratif
Vereniging zonder winstoogmerk Rue
Montoyer, 47
B-1040 Bruxelles (BE)**

(72) Inventeur: **Pirlet, Robert
32, Avenue des Lauriers
B-4920 Embourg (BE)**

(74) Mandataire: **Lacasse, Lucien Emile
CENTRE DE RECHERCHES METALLURGIQUES
Abbaye du Val-Benoît 11, rue Ernest Solvay
B-4000 Liège (BE)**

Courier Press, Leamington Spa, England.

## Description

La présente invention est relative à un procédé tel que défini dans le préambule de la revendication 1, ainsi qu'à un dispositif tel que défini dans le préambule de la revendication 7 pour la mise en oeuvre de ce procédé.

Les défauts de surface visés essentiellement par la présente invention sont les pailles et les trous se trouvant à la surface des poutrelles et produits laminés, profilés, etc., ainsi que les fissures à la surface des demi-produits tels que les blooms et les brames.

On sait que la température superficielle d'une paille sur un produit métallique est inférieure à la température superficielle du voisinage sain de ce produit. On sait également que la température d'un demi-produit, au fond d'une fissure, est supérieure à celle du voisinage sain de ce demi-produit. Il en résulte que ces deux défauts peuvent être décelés au moyen d'un appareil de mesure à distance de la température, tel que par exemple une cellule photo-électrique.

De nombreux procédés ont déjà été mis en oeuvre sur cette base et le demandeur, notamment, a préconisé de scruter une telle surface, au cours de son laminage, au moyen d'un appareil de mesure à distance de la température, d'enregistrer les résultats et de relever les variations brusques et importantes qui normalement sont significatives des défauts précité. De tels procédés pont decrits dans les documents BE—A—833.244 et GB—A—1191540.

Ces procédés se sont révélés satisfaisants et ont permis d'effectuer des constatations précoces des défauts avec possibilité de prendre opportunément des contre-mesures à la fois plus efficaces et moins onéreuses.

Toutefois, des difficultés sont apparues dans le traitement des informations à cause du très grand nombre de données provenant des vitesses relativement grandes de défilement des produits. Les spécialistes ont été contraints d'avoir recours à des jauges très complexes et très coûteuses non seulement pour traiter toutes ces informations, mais également pour assurer une interprétation correcte des variations de mesures enregistrées.

La présente invention a pour premier objet un procédé permettant de remédier à ces inconvénients.

Ce procédé est fondé sur la détermination d'un profil de référence susceptible de caractériser par comparaison les variations de mesures significatives des défauts à détecter.

A cette fin, le demandeur a eu l'idée originale d'effectuer deux mesures de température en chaque endroit de la surface à examiner: une première mesure sur une zone restreinte et une seconde mesure sur une zone plus grande contenant la première. De cette façon, s'il existe un défaut à l'endroit de la mesure, la première valeur sera différente de la seconde et la comparaison de ces deux valeurs sera indubitablement significative du défaut.

Le procédé selon la présente invention est caractérisé dans la partie caractérisante de la revendication 1.

Suivant une premier variante du procédé selon l'invention, le signal—défaut résuite du rapport ou de la différence entre les signaux représentatifs de la température des deux zones d'étendue différente.

Suivant une deuxième variante du procédé selon l'invention, le rapport des étendues de la zone large vis-à-vis de la zone restreinte est compris entre 3 et 20, et de préférence entre 6 et 12.

Suivant une troisième variante de procédé selon l'invention, toutes les zones dont on mesure le rayonnement ont la même largeur.

Suivant une quatrième variante de procédé selon l'invention, l'étendue de la zone restreinte est de l'ordre de l'étendue du défaut à détecter.

Enfin suivant une cinquième variante du procédé selon l'invention, on délimite l'étendue des zones restreintes et larges par l'intermédiaire de diaphragmes placés à proximité du dispositif de mesure de la température.

La présente invention a pour second objet un dispositif pour la mise en oeuvre du procédé décrit ci-dessus.

Le dispositif, selon la présente invention, est caractérisé en ce qu'il comprend au moins une paire de rangées de photodétecteurs, un objectif, un composant optique tel que par exemple une lame semi-réfléchissante, destiné à diviser les rayons émis par le produit en rayons provenant de la zone restreinte et en rayons provenant de la zone large, un diaphragme situé sur le trajet des rayons émis par le produit et destiné à délimiter l'étendue des zones visées, dudit produit.

Suivant un deuxième mode de réalisation du dispositif selon l'invention, les deux photodétecteurs mesurant simultanément la température de deux zones d'étendue différente appartiennant à deux rangées distinctes de photodétecteurs.

Suivant un deuxième mode de réalisation du dispositif selon l'invention, le dispositif comprend huit paires de rangées de photodétecteurs disposées symétriquement autour des produits à examiner par exemple, des poutrelles, pour collecter les rayons provenant de toutes les parties desdits produits.

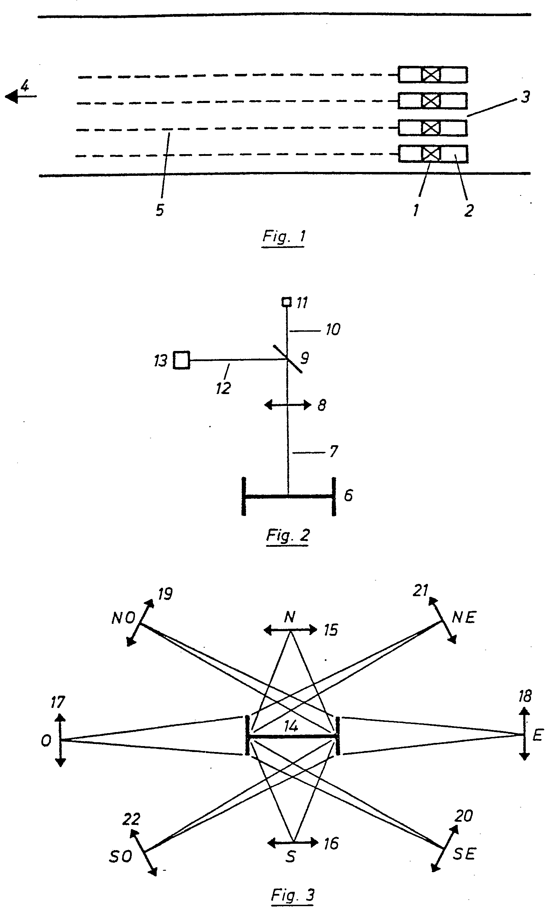

Une disposition avantageuse de ces huit paires de rangés de détecteurs est la suivante: N—S, E—O, NO—SE, NE—SO (voir figure 3).

Les figures 1 à 3 sont données à titre d'exemple pour bien faire comprendre l'objet de la présente invention.

La figure 1 représente une succession de paires de zones restreinte et large à la surface du produit à contrôler, zones dont on mesure la température à distance en cours de laminage ou de coulée.

La figure 2 représente un mode de réalisation d'un circuit des rayonnements émis par le produit et enregistrés par une paire de rangées de photodétecteurs (photodiodes au silicium).

La figure 3 représente la disposition d'un ensemble de 8 paires de ranges de detecteurs autour d'une poutrelle à contrôler.

Suivant la figure 1, chaque paire de zones de mesure comprend une zone restreinte 1 et une zone large 2 contenant la zone restreinte 1. Ces paires de zones sont disposées en une rangée 3 transversale par rapport au sens de laminage 4. En 5 se trouve le réseau des trajectoires des couples d'appareile de mesure par rapport au produit 6. Bien entendu, ces zones peuvent être disposées de multiples autres façons différentes avec possibilité de trajectoires relatives rectilignes ou non.

Si l'on veut dècter des défauts de taille nominale de l'ordre de 3 mm, la zone restreinte avec une surface de l'ordre de 3 mm×3 mm et la zone large une surface de l'ordre de 17×3 mm. Dans ce cas le rapport des surfaces de la zone large et de la zone restreinte est égale à 17. La distance entre 2 paires de zones successives est de l'ordre de 3 mm.

De la même façon, pour des défauts de taille nominale de 50 mm$^2$, on adoptera par exemple une zone restreinte de 50 mm$^2$ et une zone large de 850 mm$^2$.

Suivant la figure 2, la poutrelle 6 à contrôler émet un faisceau de rayons 7 qui traverse d'abord un diaphragme 8 et ensuite un miroir diviseur 9. Le faisceau 10 continue sa trajectoire en direction d'une diode detectrice 11 à faible champ de reception (zone restreinte) et le faisceau 12 est dévié en direction d'une diode détecteur 13 à grand champ de réception (zone large).

Suivant la figure 3, la poutrelle à contrôler est en 14 et les huit diaphragmes (15—22) des huit circuits de mesure sont disposés N—S, O—E, NO—SE, NE—SO. Cette disposition permet une scrutation complète de toutes les surfaces de la poutrelle en cours de laminage.

**Revendications**

1. Procédé pour dètecter les défauts de surface de produits métallurgiques (6) tels que brames, blooms, billettes, poutrelles, en cours de laminage ou de coulée continue ou non, procédé dans lequel, au moyen de plusieurs rangées de photodétecteurs, d'une part, on scrute la surface desdits produits (6) et, d'autre part, on mesure à distance à l'aide d'un dispositif de mesure de la température la temperature de zones bien définies situées sur ladite surface, caractérisé en ce qu'à tout instant de la dite scrutation, on mesure respectivement et simultanément au moyen d'au moins une paire (11, 13) de photodétecteurs, le rayonnement provenant de deux zones (12) d'étendues différentes de ladite surface, l'une de ces deux zones, dite zone restreinte (7) étant contenue dans l'autre zone, dite zone large (2), en ce que l'on combine les signaux représentatifs de la température desdites zones restreint et large (1, 2), en ce que l'on en déduit un signal dit signal—défaut et en ce que l'on reconnaît l'existence dans la zone restreinte (1) d'une paille ou d'une fissure lorsque ce signal—défaut est respectivement inférieur ou supérieur à un signal de référence prédeterminé en fonction de la nature du produit metallurgique (6) et des conditions opératoires.

2. Procédé suivant la revendication 1, caractérisé en ce que le signal—défaut résulte du rapport ou de la différence entre les signaux représentatifs de la température desdites deux zones (1, 2) d'etendues différentes.

3. Procédé suivant la revendication 2, caractérisé en ce que le rapport des étendues de la zone large (2) vis-à-vis de la zone restreinte (7) est compris entre 3 et 20, et de préférence entre 6 et 12.

4. Procédé suivant l'une ou l'autre des revendications 1 à 3, caractérisé en ce que toutes les zones (1, 2) dont on mesure le rayonnement ont la même largeur.

5. Procédé suivant l'une ou l'autre des revendications 1 à 4, caractérisé en ce que l'étendue de la zone restreinte (7) est de l'ordre de l'étendue du défaut à détecter.

6. Procédé suivant l'une ou l'autre des revendications 1 à 6, caractérisé en ce qu'on délimite l'étendue des zones restreintes (7) et larges (2) par l'intermédiaire de diaphragmes (8) placés à proximité dudit dispositif de mesure de la température.

7. Dispositif pour la mise en oeuvre du procédé décrit dans l'une ou l'autre des revendications 1 à 6, caractérisé en ce qu'il comprend au moins une paire de rangées de photodétecteurs (11, 12), un objectif, un composant optique tel que par exemple une lame semi-réfléchissante (9), destiné à diviser les rayons (7) émis par le produit (6) en rayons (10) provenant de la zone restreinte (1) et en rayons (12) provenant de la zone large (2), un diaphragme (8) situé sur le trajet des rayons (7) emis par le produit (6) et destiné à délimiter l'étendue des zones dudit produit (6).

8. Dispositif suivant la revendication 7, caractérisé en ce que les deux photodétecteurs (11, 13) mesurant simultanément la température de deux zones d'étendues différentes appartiennent à deux rangées distinctes de photodétecteurs.

9. Dispositif suivant les revendications 7 et 8, caractérisé en ce qu'il comprend huit paires de rangées de photodétecteurs disposées symétriquement autour des produits (6) à examiner, par exemple, des poutrelles, pour collecter les rayons provenant de toutes les parties desdits produits (6).

**Patentansprüche**

1. Verfahren zum Nachweisen von Oberflächenfehlern an Brammen, Barren, Knüppeln, Trägern und anderen Hüttenerzeugnissen (6) während des Walzens oder des einfachen oder des Stranggießens, wobei einerseits mit Hilfe von mehreren Reihen von Photoempfängern die Oberfläche dieser Erzeugnisse (6) geprüft wird und andererseits mit Hilfe einer Temperaturmeßvorrichtung durch Fernmessung die Temperatur von genau umgrenzten Bereichen auf dieser Oberfläche gemessen wird, dadurch gekennzeichnet, daß in jedem Zeitpunkt dieser Prüfung jeweils und gleichzeitig mit Hilfe mindestens eines Paares Photoempfänger (11, 13) die von zwei unterschiedlich großen Bereichen der Oberfläche ausgehende Strahlung gemessen wird, daß der als enger Bereich (1) bezeichnete eine der beiden Bereiche in dem anderen, als weiter Bereich (2) bezeichneten Bereich enthalten ist, daß die beiden für die Temperatur des engen und des weiten Bereichs (1, 2) kennzeichnenden Signale kombiniert werden, daß ein als Fehlersignal bezeichnetes Signal abgeleitet wird, und daß das Auftreten einer Schale oder eines Risses in dem engen Bereich (1) erkannt wird, wenn dieses Fehlersignal kleiner bzw. größer als ein in Abhängigkeit von der Art des Hüttenerzeugnisses (6) und den Betriebsbedingungen vorbestimmtes Bezugssignal ist.

2. Verfahren nach Anspruch 1, dadurch gekennzeichnet, daß das Fehlersignal aus dem Verhältnis oder der Differenz zwischen den für die Temperatur der beiden Bereiche (1, 2) unterschiedlicher Größe kennzeichnenden Signalen ermittelt wird.

3. Verfahren nach Anspruch 2, dadurch gekennzeichnet, daß das Verhältnis der Ausdehnung des weiten Bereichs (2) gegenüber der des engen Bereichs (1) zwischen 3 und 20, vorzugsweise zwischen 6 und 12 liegt.

4. Verfahren nach einem der Ansprüche 1 bis 3, dadurch gekennzeichnet, daß alle Bereiche (1, 2), deren Strahlung gemessen wird, gleiche Größe haben.

5. Verfahren nach einem der Ansprüche 1 bis 4, dadurch gekennzeichnet, daß die Größe des engen Bereichs (1) größenordnungsmäßig mit der Ausdehnung des nachzuweisenden Fehlers übereinstimmt.

6. Verfahren nach einem der Ansprüche 1 bis 5, dadurch gekennzeichnet, daß die Ausdehnung des engen Bereichs (1) und des weiten Bereichs (2) mit Hilfe von Blenden (8) begrenzt wird, die sich in der Nähe der Temperaturmeßvorrichtung befinden.

7. Vorrichtung zur Ausübung des Verfahrens nach einem der Ansprüche 1 bis 6, dadurch gekennzeichnet, daß mindestens zwei Reihen Photoempfänger (11, 13) vorgesehen sind sowie ein Objektiv, ein optisches Teil nach Art eines halbdurchlässigen Streifens (9) zum Unterteilen der von dem Erzeugnis (6) ausgesandten Strahlen (7) in von dem engen Bereich (1) herrührende Strahlen (10) und von dem weiten Bereich (2) herrührende Strahlen (12), eine in der Bahn der von dem Erzeugnis (6) ausgesandten Strahlen (7) stehende Blende (8) zur Abgrenzung der Fläche der anvisierten Bereiche des Erzeugnisses (6).

8. Vorrichtung nach Anspruch 7, dadurch gekennzeichnet, daß die beiden Photoempfänger (11, 13), die gleichzeitig die Temperatur von zwei Bereichen unterschiedlicher Größe messen, zu zwei unterschiedlichen Reihen von Photoempfängern gehören.

9. Vorrichtung nach den Ansprüchen 7 und 8, dadurch gekennzeichnet, daß acht Paare Reihen mit Photoempfängern vorgesehen sind, die symmetrisch um die zu untersuchenden Erzeugnisse (6), beispielsweise Träger, angeordnet sind, um die Strahlen aufzufangen, die von allen Teilen dieser Erzeugnisse (6) ausgehen.

**Claims**

1. Method of detecting surface defects on metal products (6) such as slabs, blooms, billets and beams, during rolling, continuous casting or otherwise, in which a number of rows of photosensitive detectors are used to scan the surface of the said products (6) and to measure remotely by means of a temperature-measuring device the temperature of clearly defined areas of the aforementioned surface, characterized by the fact that at all times during the said scanning operation at least one pair (11, 13) of photosensitive detectors are used to measure individually and simultaneously the radiation emitted by two areas of different size of the said surface, one of these two areas, termed the "confined area" (1), being contained within the other area, termed the "wide area" (2), also characterized by the fact that signals representing the temperatures of the aforementioned confined and wide areas (1, 2) are combined and that this information is used to establish a signal known as the "defect signal", and further characterized by the fact that the existence in the confined area (1) of a shell or a crack is revealed when this defect signal is either below or above a reference signal determined previously according to the nature of the metal product (6) and the operating conditions.

2. Method in accordance with claim 1 characterized by the fact that the defect signal is derived from the ratio or difference between the signals representing the temperatures of the two areas (1, 2) of different size.

3. Method in accordance with claim 2 characterized by the fact that the respective sizes of the wide (2) and confined (1) areas are in a ratio of between 3 and 20 and preferably between 6 and 12.

4. Method in accordance with any of claims 1 to 3 characterized by the fact that all the areas (1, 2) whose radiation is measured are of the same width.

5. Method in accordance with any of claims 1 to 4 characterized by the fact that the extent of the confined area (1) approximates to that of the defect to be detected.

6. Method in accordance with any of claims 1 to 5 characterized by the fact that the extent of the confined (1) and wide (2) areas is delimited by means of diaphragms (8) placed close to the aforementioned temperature-measuring device.

7. Device for the application of the method described in any of claims 1 to 6 characterized by the fact that it comprises at least one pair of rows of photosensitive detectors (11, 13), an objective, an optical component such as a semi-reflecting plate (9) used to divide the rays (7) emitted by the product (6) into those (10) originating from the confined area (1) and those (12) emitted by the wide area (2), a diaphragm (8) located in the path of the rays (7) emitted by the product (6) and serving to delimit the extent of the scanned areas of the said product (6).

8. Device in accordance with claim 7 characterized by the fact that the two photosensitive detectors (11, 13) measuring simultaneously the temperature of two areas of different extent belong to two separate rows of photosensitive detectors.

9. Device in accordance with claims 7 and 8 characterized by the fact that it comprises eight pairs of rows of photosensitive detectors arranged symmetrically about the products (6) to be inspected, e.g. beams, in order to pick up radiation emitted from all parts of the said products (6).

Fig. 1

Fig. 2

Fig. 3